# EUROPÄISCHE PATENTSCHRIFT

(11) **EP 4 257 439 B1**
(45) Veröffentlichungstag und Bekanntmachung des Hinweises auf die Patenterteilung: **02.12.2026**
(21) Anmeldenummer: 23187886.9
(22) Anmeldetag: 02.10.2017
(51) Int. Cl.: B60W 20/14, B60W 30/18, B60W 20/10, B60W 20/11, B60K 6/485, B60W 10/06, B60W 10/08, B60W 10/24, B60W 10/30, B60W 50/00, B60L 58/20

(54) **BETRIEBSVERFAHREN UND VORRICHTUNG ZUR STEUERUNG EINES MOTORISCHEN BETRIEBS EINER ELEKTRISCHEN MASCHINE EINES MILD-HYBRIDANTRIEBS EINES KRAFTFAHRZEUGS**
METHOD OF OPERATION AND DEVICE FOR CONTROLLING A MOTORISED OPERATION OF AN ELECTRICAL MACHINE OF A MILD HYBRID DRIVE OF A MOTOR VEHICLE
PROCÉDÉ DE FONCTIONNEMENT ET DISPOSITIF DE COMMANDE D'UN FONCTIONNEMENT MOTORISÉ D'UNE MACHINE ÉLECTRIQUE D'UN ENTRAÎNEMENT HYBRIDE DOUX D'UN VÉHICULE À MOTEUR

(30) Priorität: 21.10.2016 DE 102016012628
(43) Veröffentlichungstag der Anmeldung: 11.10.2023
(62) Dokumentnummer(n) der früheren Anmeldung(en) nach Art. 76 EPÜ: 17194310.3 / 3 312 069
(73) Patentinhaber: MAN Truck & Bus SE, 80995 München (DE)
(72) Erfinder: Fischer, Detlef, 80995 München (DE); Kerschl, Stefan, 80995 München (DE); Freiherr von Esebeck, Götz, 15831 Blankenfelde-Mahlow (DE)
(74) Vertreter: v. Bezold & Partner Patentanwälte - PartG mbB

(56) Entgegenhaltungen:
- WO-A1-2012/005655
- DE-A1- 102013 014 103
- US-B1- 6 314 347
- US-B2- 9 227 626

## Beschreibung

Die Erfindung betrifft ein Betriebsverfahren zur Steuerung eines motorischen Betriebs einer motorisch und generatorisch betreibbaren elektrischen Maschine eines Mild-Hybridantriebs eines Kraftfahrzeugs, wobei die elektrische Maschine dazu ausgebildet ist, einen Verbrennungsmotor des Kraftfahrzeugs zumindest zeitweise anzutreiben und in einem Rekuperationsbetrieb elektrische Energie zu erzeugen. Die Erfindung betrifft ferner eine Vorrichtung, die ausgebildet ist, das Betriebsverfahren auszuführen.

Durch stetig strenger werdende Abgasgesetzgebungen und Forderungen der Fahrzeughalter nach reduzierten Betriebskosten werden an Kraftfahrzeuge zunehmend hohe Anforderungen bezüglich ihres Kraftstoffverbrauchs und ihrer Schadstoffemissionen gestellt, während gleichzeitig ein hoher Fahrkomfort realisiert werden soll. Um dieses Ziel zu erreichen, ist es aus der Praxis bekannt, Fahrzeuge mit einem Mildhybridantriebsystem auszurüsten, bei denen eine elektrische Maschine als Startergenerator zum Starten des Verbrennungsmotors und zur Bremsenergierückgewinnung (Rekuperation) verwendet wird und die den Verbrennungsmotor zur Leistungssteigerung unterstützen kann. Ein rein elektrisches Fahren ist nicht möglich. Derartige Fahrzeuge können mit einer Stopp-Start-Automatik-Vorrichtung ausgerüstet sein, mittels derer die Brennkraftmaschine unter vorbestimmten Bedingungen automatisch abgeschaltet und gestartet werden kann. So wird der Verbrennungsmotor beispielsweise automatisch abgeschaltet, wenn keine Antriebskraft benötigt wird, z. B. während des Anhaltens an einer Verkehrsampel. Sobald wieder Antriebskraft benötigt wird, wenn also etwa die Verkehrsampel auf "Grün" schaltet und der Fahrer das Gaspedal betätigt, erfolgt ein Neustart über den Elektromotor. Der Kraftstoffverbrauch des Fahrzeugs kann dadurch gesenkt werden. Ferner können solche Mildhybridantriebsysteme das Bordnetz versorgen.

Für derartige Fahrzeuge in jüngerer Zeit entwickelte Bordnetze weisen außer einem ersten Basisbordnetz mit einem ersten Spannungsniveau noch ein zweites Teilnetz (Inselnetz) mit einem zweiten Spannungsniveau auf. Dabei sind das erste und das zweite Teilnetz bzw. Spannungsniveau über einen Spannungswandler miteinander gekoppelt. An dem ersten Teilnetz mit der niedrigeren Nennspannung (z. B. 24 V) sind in der Regel Verbraucher mit niedriger Leistungsaufnahme angeschlossen. Ferner kann ein erster Energiespeicher vorgesehen sein. An dem zweiten Teilnetz mit der höheren Nennspannung (z. B. 48 V) können Hochleistungsverbraucher, ein Generator und ein zweiter Energiespeicher angeschlossen sein. Niederspannungsverbraucher können in kritischen Betriebssituationen wahlweise aus dem zweiten Teilnetz versorgt werden. Ein solches für ein Mildhybrid- oder Mikrohybridsystem geeignetes Bordnetz ist beispielsweise aus der DE 10 2013 014 103 A1 bekannt.

Der Generator kann ein sogenannter Mehrspannungsgenerator (Multi-Voltage-Generator, MVG) sein, der je nach der an seiner Erregerspule anliegenden Spannung eine hohe oder eine niedrige Spannung erzeugt und die beiden Teilnetze mit elektrischer Leistung versorgt. Falls der Generator als elektrischer Starter-Generator, z. B. als Kurbelwellenstartergenerator aus-gebildet ist, kann dieser für den Motorstart verwendet werden. Meist wird zwischen diesen Teilnetzen zur Kopplung der beiden Teilnetze ein Spannungs-(DC/DC)-Wandler installiert, der in der Lage ist, Energie zwischen den Netzen zu transferieren. Der Generator im zweiten Teilnetz kann ferner für einen Rekuperationsbetrieb eingesetzt werden, wobei bei der Verzögerung des Fahrzeugs frei werdende kinetische Energie in elektrische Energie gewandelt (rekuperiert) wird. Die so gewonnene elektrische Energie kann in wenigstens einem Energie-speicher gespeichert und in anderen Fahrsituationen, z. B. zum Antrieb des Fahrzeugs oder zur Versorgung elektrischer Verbraucher, genutzt werden. Der Wirkungsgrad des Fahrzeugs kann dadurch erheblich gesteigert werden.

Das Dokument WO 2012/005655 A1 beschreibt ein Energiekontrollsystem für ein Hybridfahrzeug mit einer Kontrolleinheit, welche zu einem Zeitpunkt *t₀* einen Zeitpunkt *t₁* berechnet, an dem eine Verzögerungsphase beginnt, um an einem vorbestimmten Ort P anzuhalten, so dass zum Zeitpunkt *t₁* der Ladezustand eines ladbaren Energiespeichers unterhalb eines vorherbestimmten Wertes Q_{L} liegt.

In dem Dokument DE 10 2013 014 103 A1 wird ein Bordnetz eines Kraftfahrzeugs beschrieben. Das Bordnetz umfasst ein erstes Teilnetz, in dem eine erste Nennspannung anliegt, ein zweites Teilnetz, in dem eine zweite Nennspannung anliegt, und einen Spannungswandler, der das erste Teilnetz mit dem zweiten Teilnetz bidirektional verbindet. Das erste Teilnetz umfasst einen ersten Energiespeicher und einen ersten, durch mehrere Verbraucher gebildeten, Lastwiderstand. Das zweite Teilnetz umfasst eine elektrischen Maschine, die zum Starten eines Verbrennungsmotors des Kraftfahrzeugs und zum Generatorbetrieb bzw. Rekuperationsbetrieb ausgebildet ist, und einen zweiten Energiespeicher, der mit der elektrischen Maschine verbunden und ausgebildet ist, von der elektrischen Maschine in dem Generatorbetrieb bzw. Rekuperationsbetrieb erzeugte elektrische Ladung zu speichern. Der Spannungswandler ist ausgebildet, in Abhängigkeit eines Ladezustands des ersten Energiespeichers und/oder eines Ladezustands des zweiten Energiespeichers Energie über den Spannungswandler zwischen dem ersten und zweiten Teilnetz zu übertragen.

Die US 6,314,347 B1 offenbart eine Vorrichtung zur Fahrsteuerung eines Hybridfahrzeugs, welche auf der Grundlage eines Punktes, an dem der Start des Fahrzeugs vorhergesagt wird, und eines Punktes, an dem der Stopp des Fahrzeugs vorhergesagt wird, oder eines Startpunktes eines Regenerationsabschnitts, in dem der Motor kontinuierlich einen Regenerationsbetrieb für eine vorbestimmte Zeit oder länger als Grenze durchführt eine Strecke in eine Vielzahl von Abschnitten unterteilt. Für jeden der Vielzahl von Abschnitten wird dann auf der Grundlage eines Straßenzustands und einer Fahrhistorie ein Fahrzeuggeschwindigkeitsmuster geschätzt und einen Betriebsplan des Verbrennungsmotors und des Motors so einstellt, dass der Kraftstoffverbrauch des Verbrennungsmotors zum Zielort auf der Grundlage des Fahrzeuggeschwindigkeitsmusters und der Kraftstoffverbrauchseigenschaften des Verbrennungsmotors minimiert wird.

Das Dokument US 9,227,626 B2 beschreibt ein Verfahren zur Unterstützung eines Verbrennungsmotors für ein Fahrzeug unter Verwendung eines mit dem Motor gekoppelten Elektromotors. Das Verfahren umfasst die Vorhersage eines Fahrbereichs auf der Grundlage historischer Fahrbereichsdaten. Die historischen Fahrbereichsdaten umfassen eine oder mehrere Entfernungen, die das Fahrzeug während eines oder mehrerer früherer Fahrzyklen zurückgelegt hat. Das Verfahren umfasst ferner das selektive Betreiben des Motors, um bei vorbestimmten Betriebsbedingungen des Motors Unterstützung für den Motor bereitzustellen. Die dem Motor bei einem oder mehreren der vorbestimmten Betriebszustände bereitgestellte Unterstützung wird zumindest teilweise auf der Grundlage der vorhergesagten Fahrreichweite bestimmt.

Es ist eine Aufgabe der Erfindung, diesen Stand der Technik weiterzubilden, insbesondere um die Kraftstoffeffizienz derartiger Fahrzeuge weiter zu verbessen.

Gemäß einem ersten Gesichtspunkt der Erfindung wird ein Betriebsverfahren gemäß dem beigefügten Patentanspruch 1 zur Steuerung eines motorischen Betriebs einer motorisch und generatorisch betreibbaren elektrischen Maschine eines Mild-Hybridantriebs eines Kraftfahrzeugs bereitgestellt. Das Kraftfahrzeug umfasst in an sich bekannter Weise eine Stopp-Start-Automatik-Vorrichtung, mittels derer die Brennkraftmaschine unter vorbestimmten Bedingungen automatisch abgeschaltet und gestartet werden kann. Zumindest für den Warmstart des Verbrennungsmotors wird die elektrische Maschine des Mild-Hybridantriebs von der Stopp-Start-Automatik-Vorrichtung als Starter genutzt, die somit als Startergenerator verwendet wird. Die elektrische Maschine kann ein Kurbelwellenstartergenerator sein. Hierbei ist die elektrische Maschine ferner ausgebildet, einen Verbrennungsmotor des Kraftfahrzeugs zumindest zeitweise anzutreiben und in einem Rekuperationsbetrieb elektrische Energie zu erzeugen.

Erfindungsgemäß wird nun in geeigneten Fahrsituationen ein motorischer Betrieb der elektrischen Maschine während der Fahrt, d. h. im Fahrbetrieb, des Kraftfahrzeugs dazu genutzt, um mit einem motorischen Betrieb der elektrischen Maschine ein Drehmoment zu erzeugen, um den Verbrennungsmotor des Kraftfahrzeugs zu entlasten oder zu unterstützen. Unter einem motorischen Betrieb der elektrischen Maschine "während der Fahrt" wird verstanden, dass der motorische Betrieb nicht beim Startvorgang, sondern im normalen Fahrbetrieb, d. h. bei einer Fahrgeschwindigkeit von v > 0 km/h, stattfindet, so dass die elektrische Maschine zur Erzeugung eines entlastenden oder unterstützenden Drehmoment im normalen Fahrbetrieb genutzt wird und nicht nur motorisch zum Starten des Verbrennungsmotors im Rahmen eines Stopp-Start-Betriebs.

Hierbei wird die Entscheidung, ob hierfür eine geeignete Fahrsituation vorliegt, d. h. ob und/oder mit welcher Leistung ein motorischer Betrieb der elektrischen Maschine während der Fahrt des Kraftfahrzeugs durchgeführt wird, in Abhängigkeit von momentanen Werten mindestens eines Betriebsparameters des Kraftfahrzeugs und in Abhängigkeit von zurückliegenden Fahrbetriebsdaten bestimmt.

Der mindestens eine Betriebsparameter umfasst einen Leistungsbedarf des Fahrzeugbordnetzes, eine Fahrzeuggeschwindigkeit, und einen Ladezustand eines Energiespeichers. Der Ladezustand gibt die im Energiespeicher gespeicherte und/oder noch speicherbare Energie an. Der Energiespeicher kann von der elektrischen Maschine rekuperierte Energie speichern. Alle diese Betriebsparameter werden verwendet, um zu bestimmen, ob und/oder mit welcher Leistung ein motorischer Betrieb der elektrischen Maschine während der Fahrt des Kraftfahrzeugs durchgeführt wird.

Vorzugsweise geben die zurückliegenden Fahrbetriebsdaten eine Zeitdauer von Fahrzeugstopps im Rahmen eines Stopp-Start-Betriebs des Kraftfahrzeugs, bei dem die Brennkraftmaschine unter vorbestimmten Bedingungen automatisch abgeschaltet und mittels der elektrischen Maschine gestartet werden kann, eine Fahrzeit zwischen Fahrzeugstopps im Rahmen des Stopp-Start-Betriebs des Kraftfahrzeugs, und eine durchschnittliche Fahrzeugverzögerung an, die basierend auf zurückliegenden, d. h. vorausgegangenen Fahrbetriebssituationen ermittelt wurde. Die durchschnittliche Fahrzeugverzögerung gibt an, mit welcher Durchschnittsverzögerung das Kraftfahrzeug bei einem Rekuperationsvorgang verzögert wird und kann basierend auf zurückliegenden Fahrbetriebsdaten bestimmt und z. B. vorab im Kraftfahrzeug hinterlegt sein.

Unter "zurückliegenden Fahrbetriebsdaten" werden Fahrbetriebsdaten verstanden, die vergangene Fahrsituationen betreffen, also die eine Historie des Fahrbetriebs treffen. Dabei können diese vom Kraftfahrzeug selbst auf Basis des vergangenen Fahrverhaltens ermittelt worden sein. Ferner besteht die Möglichkeit, dass diese auf Basis eines vergangenen Fahrbetriebs eines oder mehrere anderer Fahrzeugs ermittelt worden sind und anschließend in dem Kraftfahrzeug hinterlegt oder anderweitig zur Verfügung gestellt werden. Dies ist besonders vorteilhaft für Flottenfahrzeuge, wie Omnibusse oder Lastkraftwagen, die die gleichen oder ähnliche Routen (z. B. Buslinien) fahren. Bei Omnibussen können die Fahrzeugstopps insbesondere Stopps an Haltestellen sein, so dass eine Zeitdauer vergangener Fahrzeugstopps die Haltezeit an Haltestellen umfasst oder angibt und eine Fahrzeit zwischen Fahrzeugstopps die typischen Fahrzeiten zwischen Haltestellen umfasst oder angibt.

Besonders vorteilhaft ist, wenn sowohl die Zeitdauer vergangener Fahrzeugstopps im Rahmen eines Stopp-Start-Betriebs des Kraftfahrzeugs, die Fahrzeit zwischen Fahrzeugstopps im Rahmen eines Stopp-Start-Betriebs des Kraftfahrzeugs und eine zurückliegende durchschnittliche Fahrzeugverzögerung verwendet werden, um zu bestimmen, ob und/oder mit welcher Leistung ein motorischer Betrieb der elektrischen Maschine während der Fahrt des Kraftfahrzeugs durchgeführt wird.

Durch die Verwendung nicht nur von momentanen Werten mindestens eines Betriebsparameters des Kraftfahrzeugs sondern ferner von zurückliegenden Fahrbetriebsdaten der vorgenannten Parameter können vorteilhafte Fahrsituationen für einen derartigen motorischen Betrieb zuverlässig erkannt und vorhergesagt werden. Der motorische Betrieb der elektrischen Maschine zur Entlastung des Verbrennungsmotors bietet den Vorteil, dass der Lastpunkt des Verbrennungsmotors abgesenkt werden kann, so dass dieser weniger Kraftstoff verbraucht. Besonders vorteilhaft ist dies, wenn dieser motorische Betrieb der elektrischen Maschine in Fahrsituationen erfolgt, in denen die für den motorischen Betrieb der elektrischen Maschine eingesetzte elektrische Energie überschüssig ist, d. h. z. B. sonst nicht anderweitig nutzbar ist oder durch einen nachfolgenden Stopp-Vorgang im Rahmen des Stopp-Start-Betriebs wieder rekuperiert werden kann. In einer weiteren möglichen Anwendung substituiert das motorische Moment des Elektromotors das des Verbrennungsmotors, falls dieser in schlechten Wirkungsgradbereichen betrieben wird.

Die vorstehend genannten Betriebsparameter und zurückliegenden Fahrbetriebsdaten sind besonders geeignet, um eine Prognose zu treffen, ob aktuell überschüssige elektrische Energie vorhanden ist, die für eine spätere Nutzung verloren gehen würde und die daher für einen motorischen Betrieb der elektrischen Maschine im Fahrbetrieb genutzt werden könnte, um die Kraftstoffeinsparung zu erhöhen. Dies wird nachfolgend noch detaillierter erläutert.

Gemäß einem weiteren Aspekt der Erfindung kann die Entscheidung, ob und/oder mit welcher Leistung ein motorischer Betrieb der elektrischen Maschine während der Fahrt durchgeführt wird, um mit einem motorischen Drehmoment den Verbrennungsmotor des Kraftfahrzeugs zu entlasten oder zu unterstützen, in Abhängigkeit von mindestens einer Systemeigenschaft des Mildhybridsystems bestimmt werden. Hierbei kann die mindestens eine Systemeigenschaft einen maximalen Energieinhalt eines Energiespeichers und/oder eine elektrische Leistungsfähigkeit der elektrischen Maschine umfassen. Der maximale Energieinhalt des Energiespeichers gibt in Kombination mit dem aktuellen Ladezustand des Energiespeichers an, wie hoch die Energie ist, welche von der elektrischen Maschine rekuperiert werden kann.

Erfindungsgemäß wird in Abhängigkeit von momentanen Werten des mindestens einen Betriebsparameters des Kraftfahrzeugs, der zurückliegenden Fahrbetriebsdaten und vorzugsweise mindestens einer Systemeigenschaft des Mildhybridantriebs ermittelt, ob in der aktuellen Fahrsituation überschüssige Energie vorhanden ist. Unter überschüssiger Energie wird elektrische Energie verstanden, die sonst nicht anderweitig nutzbar ist und verloren gehen würde. Dies ist beispielsweise dann der Fall, wenn der elektrische Energiespeicher des Mildhybridsystems so voll ist, dass beim nächsten Stopp-Vorgang die rekuperierbare Energie nicht mehr gespeichert werden könnte und somit verloren gehen würde. Zudem können erhöhte Temperaturen z. B. an Komponenten oder Lebensdauermodelle von Komponenten im Steuergerät zu einer reduzierten Rekuperationsleistung und somit zu nicht rekuperierbarer bzw. nicht speicherbarer Energie führen. Überschüssige Energie kann desweiteren verfügbare elektrische Energie des elektrischen Energiespeichers oder erwartete Energie aus einem prognostizierten Rekuperationsvorgang sein, die voraussichtlich nicht zur Versorgung eines Bordnetzes des Kraftfahrzeugs und für den Motorstart durch die elektrische Maschine im Rahmen des Stopp-Start-Betriebs des Kraftfahrzeugs benötigt wird.

Falls bestimmt wird, dass überschüssige Energie vorhanden ist, wird diese zum Teil oder vollständig für den motorischen Betrieb der elektrischen Maschine während der Fahrt verbraucht. Gemäß einem Ausführungsbeispiel wird der motorische Betrieb über die elektrische Maschine nur verwendet, wenn es wahrscheinlich ist, dass die ausgegebene Energie vom Fahrzeug durch Rekuperation wieder generiert werden kann und genug Energie für den Motor-Stopp-Start-Betrieb vorhanden ist. Auf diese Weise kann die Kraftstoffeinsparung des Kraftfahrzeugs weiter erhöht werden. Die überschüssige Energie kann unter Verwendung eines Bewertungsmodells oder einer Bewertungsfunktion ermittelt werden. Ein derartiges Bewertungsmodell kann beispielsweise prüfen, ob basierend auf dem Ladezustand des elektrischen Energiespeichers und/oder anhand von einem prognostizierten Rekuperationsvorgang Energie verfügbar ist, die voraussichtlich nicht zur Versorgung eines Bordnetzes des Kraftfahrzeugs und für den Motorstart durch die elektrische Maschine im Rahmen des Stopp-Start-Betriebs des Kraftfahrzeugs benötigt wird.

Ist dies der Fall, wird die überschüssige Energie vorzugsweise für den motorischen Betrieb der elektrischen Maschine im Fahrbetrieb genutzt.

Vorstehend wurde bereits erwähnt, dass die vorstehend genannten Betriebsparameter, zurückliegende Fahrbetriebsdaten und Systemeigenschaften besonders geeignet sind, um eine Prognose zu treffen, ob aktuell überschüssige elektrische Energie vorhanden ist, die für eine spätere Nutzung verloren gehen würde und die daher für einen motorischen Betrieb der elektrischen Maschine im Fahrbetrieb genutzt werden könnte, um die Kraftstoffeinsparung zu erhöhen.

Eine erfindungsgemäße Realisierung sieht daher vor, dass die Entscheidung, ob und/oder mit welcher Leistung ein motorischer Betrieb der elektrischen Maschine während der Fahrt durchgeführt wird, die folgenden Schritte umfasst:
Bestimmen (Prädizieren) einer Rekuperationsenergie E_rek für einen aktuellen Betriebszustand des Kraftfahrzeugs, wobei die Rekuperationsenergie E_rek angibt, wieviel Energie rekuperierbar wäre, falls das Kraftfahrzeug ausgehend vom momentanen Fahrzustand bis mindestens auf einen Geschwindigkeitsschwellenwert v_min abgebremst würde. Der Geschwindigkeitsschwellenwert v_min gibt hierbei vorzugsweise eine Geschwindigkeitsgrenze an, oberhalb derer Energie im Rekuperationsbetrieb rekuperierbar ist und unterhalb derer kein Rekuperationsbetrieb möglich ist. Die Rekuperationsenergie E_rek schätzt somit ab, wieviel Energie aus der kinetischen Bewegungsenergie des Kraftfahrzeugs durchschnittlich rekuperierbar ist, falls das Kraftfahrzeug bis zum Stillstand abgebremst wird und beispielsweise in eine Stopp-Phase des Stopp-Start-Betriebs übergeht. Falls es weitere Komponenteneigenschaften gibt, welche die Rekuperationsleistung einschränken (z. B. Derating-Modell) können diese für die Berechnung der überschüssigen Energie verwendet werden. Das Abschätzen dieser Rekuperationsenergie E_rek bietet den Vorteil, dass unter Berücksichtigung des aktuellen Energiespeicherniveaus des Energiespeichers auf diese Weise genauer abgeschätzt werden kann, ob eine elektrische Energie, die für einen motorischen Betrieb der elektrischen Maschine im Fahrbetrieb verwendet wird, durch einen nachfolgenden Rekuperationsvorgang wieder generiert werden kann und ob bei Beginn einer kommenden Stopp-Phase des Stopp-Start-Betriebs ausreichend Energie im Energiespeicher zur Verfügung stehen wird.

Die bestimmte bzw. prädizierte Rekuperationsenergie E_rek kann in Abhängigkeit von einer aktuellen Fahrzeuggeschwindigkeit, einer durchschnittlichen Fahrzeugverzögerung, einer Bordnetzlast und einer maximalen Ladeleistung am Energiespeicher bestimmt werden. Die maximale Ladeleistung am Speicher entspricht z. B. dem Minimalwert aus maximaler elektrischer Leistung der elektrischen Maschine und der maximalen elektrischen Ladeleistung des Speichers. Anstelle der maximalen Ladeleistung am Energiespeicher kann auch nur die voraussichtliche elektrischen Leistungsfähigkeit der elektrischen Maschine, die einer maximalen generatorischen Leistungsfähigkeit des Rekuperationsbetriebs (z. B. inkl. Temperatur-Leistungsderating) entspricht, herangezogen werden. So kann eine voraussichtliche Bremsdauer aus der aktuellen Fahrzeuggeschwindigkeit und einer angenommenen durchschnittlichen Fahrzeugverzögerung, die auf Basis zurückliegender Fahrbetriebsdaten ermittelt wurde, abgeschätzt werden. Basierend auf der voraussichtlichen Bremsdauer ergibt sich dann aus einer angenommenen Rekuperationsleistung, z. B. unter Annahme einer maximalen generatorischen bzw. elektrischen Leistungsfähigkeit der elektrischen Maschine abzüglich des aktuellen Leistungsbedarfs des Bordnetzes (aktuelle Bordnetzlast), die voraussichtlich rekuperierbare Energie, falls das Fahrzeug zum Stillstand gebracht wird. Auf diese Weise kann ausgehend vom momentanen Fahrzustand des Fahrzeugs die voraussichtlich rekuperierbare Energie zuverlässig vorhergesagt bzw. abgeschätzt werden.

Besonders vorteilhaft ist ferner, wenn die prädizierte Rekuperationsenergie E_rek im Fahrbetrieb fortlaufend neu berechnet wird, sobald sich der Fahrzeugzustand, insbesondere die Fahrzeuggeschwindigkeit, ändert. Die durchschnittliche Fahrzeugverzögerung kann angeben, mit welcher Durchschnittsverzögerung das Kraftfahrzeug bei einem Rekuperationsvorgang verzögert wird und auf Basis zurückliegender Fahrbetriebsdaten bestimmt worden sein und z. B. vorab im Kraftfahrzeug hinterlegt sein.

Ferner wird die Mindestenergie E_Stopp, die durchschnittlich für eine Motorstoppphase eines Stopp-Start-Betriebs benötigt wird, bestimmt. Hierbei wird die Mindestenergie E_Stopp, die durchschnittlich für eine Motorstoppphase eines Stopp-Start-Betriebs benötigt wird, als Summe aus einer Motorstartenergie für den Start-Stopp-Betrieb und einem Energiebedarf für eine Bordnetzversorgung während einer Stopp-Phase des Stopp-Start-Betriebs bestimmt. Die Motorstartenergie gibt hierbei an, wieviel elektrische Energie aus dem Energiespeicher für den Warmstart des Verbrennungsmotors im Rahmen des Stopp-Start-Betriebs benötigt wird, wobei die elektrische Maschine als Startermotor dient. Der Energiebedarf für die Bordnetzversorgung kann in Abhängigkeit von einer durchschnittlichen Fahrzeugstillstandszeit der Stopp-Phase, der benötigten Energie für den Motorwarmstart und einer durchschnittlichen Bordnetzlast bestimmt werden. Auf diese Weise kann ermittelt werden, wieviel elektrische Energie bei Fahrzeugstillstand für die Grundfunktionen, z. B. Motorstart und Bordnetzversorgung, während der Stopp-Phase vonnöten ist.

In Abhängigkeit von einem aktuellen Ladezustand des Energiespeichers, der bestimmten Rekuperationsenergie und der bestimmten Mindestenergie wird dann bestimmt, ob und/oder wieviel Energie für einen motorischen Betrieb der elektrischen Maschine während der Fahrt zu Verfügung steht. Ausgehend hiervon kann dann entschieden werden, ob und/oder mit welcher Leistung der motorische Betrieb der elektrischen Maschine im Fahrbetrieb bis zum nächsten Fahrzeugstopp durchgeführt wird.

In diese Betrachtung können ferner die Fahrzeiten zwischen Fahrzeugstopps eingehen, die ebenfalls auf Basis zurückliegender Fahrbetriebsdaten bestimmt worden sind und z. B. vorab im Kraftfahrzug hinterlegt sein können. In Verbindung mit dem aktuellen Leistungsbedarf des Bordnetzes kann hieraus ein Energiebedarf zur Versorgung des Bordnetzes während des Fahrbetriebs ermittelt werden und zusätzlich in die Betrachtung überschüssiger Energie einfließen.

Gemäß einem weiteren Aspekt kann das Kraftfahrzeug ein Bordnetz aufweisen, mit einem ersten Teilnetz, in dem eine erste Nennspannung U1 anliegt, umfassend einen ersten Energiespeicher und einen durch mehrere Verbraucher gebildeten ersten Lastwiderstand; sowie mit einem zweiten Teilnetz, in dem eine zweite Nennspannung U2, die größer als die erste Nennspannung U1 ist, anliegt, umfassend die generatorisch und motorisch betreibbare elektrische Maschine und den Energiespeicher des Mildhybridantriebs (nachfolgend als zweiten Energiespeicher bezeichnet), der dazu ausgebildet ist, die elektrische Maschine zumindest zeitweise mit elektrischer Energie zu versorgen und von der elektrischen Maschine erzeugte Energie zu speichern, und mit einem Spannungswandler, der das erste und zweite Teilnetz miteinander gekoppelt.

Gemäß einem zweiten Gesichtspunkt der Erfindung wird ferner eine Vorrichtung zur Steuerung eines motorischen Betriebs einer motorisch und generatorisch betreibbaren elektrischen Maschine eines Mild-Hybridantriebs eines Kraftfahrzeugs bereitgestellt, die ausgebildet ist, das Betriebsverfahren, wie in diesem Dokument beschrieben, durchzuführen.

Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Verfahrensmerkmale gelten somit auch als funktionale Merkmale für die Steuerung zur Durchführung des Betriebsverfahrens.

Die Erfindung betrifft ferner ein Kraftfahrzeug, insbesondere Nutzfahrzeug, mit einer solchen Vorrichtung.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: schematisch ein Ausführungsbeispiel für ein Bordnetz eines Fahrzeugs, insbesondere eines Nutzfahrzeugs, das als Mildhybrid ausgeführt ist; und
- Figur 2: ein schematisches Ablaufdiagramm zur Illustration eines Betriebsverfahrens gemäß einem Ausführungsbeispiel der Erfindung.

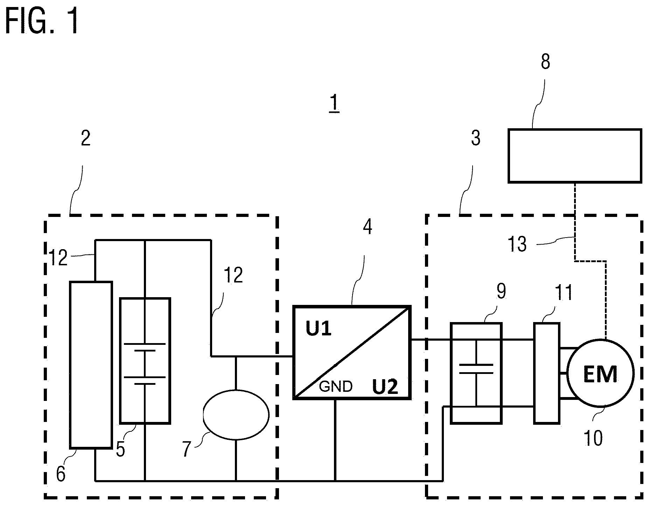

Bei dem in Figur 1 gezeigten Bordnetz 1 handelt es sich beispielsweise um ein Bordnetz 1 eines Nutzfahrzeugs, insbesondere eines Omnibusses oder Lastkraftwagens. Das Bordnetz 1 umfasst ein erstes Teilnetz (Basisbordnetz) 2, in dem eine erste Netzspannung U1 von 24 Volt anliegt und das einen ersten Energiespeicher 5 und einen Lastwiderstand 6 umfasst. Der Lastwiderstand 6 ist durch wenigstens einen, vorzugsweise durch mehrere Verbraucher gebildet. Im ersten Teilnetz 2 ist ferner ein konventioneller Starter 7, z. B. ein Ritzelstarter, für den Verbrennungsmotor (nicht gezeigt) des Kraftfahrzeugs vorgesehen, der zum Kaltstart verwendet wird.

Ferner umfasst das Bordnetz 1 ein zweites Teilnetz 3, in dem eine zweite Netzspannung U2 von 48 Volt anliegt und in dem eine elektrische Maschine 10 vorgesehen ist. Die elektrische Maschine 10 ist zum Starten eines Verbrennungsmotors des Kraftfahrzeugs im Rahmen eines Start-Stopp Betriebs und zum Generatorbetrieb bzw. Rekuperationsbetrieb ausgebildet und stellt somit einen Teil des Mild-Hybridantriebs dar. Im zweiten Teilnetz 3 ist ferner ein zweiter Energiespeicher 9 vorgesehen, der mit der elektrischen Maschine 10 über einen Inverter 11 verbunden ist. Der zweite Energiespeicher 9 ist ausgebildet, von der elektrischen Maschine 10 in dem Generatorbetrieb bzw. Rekuperationsbetrieb erzeugte elektrische Energie zu speichern. Der Energiespeicher 9 kann lediglich beispielhaft als Doppelschichtkondensator ausgebildet sein. Der erste Energiespeicher 5 kann ebenfalls als Kondensatorspeicher ausgebildet sein oder als Bleiakkumulator oder Lithium-Ionen-Akkumulator ausgebildet sein. Im zweiten Teilnetz 3 können optional auch weitere Verbraucher angeordnet sein, für die ein Betrieb mit 48V-Betriebsspannung vorteilhaft, z. B. effizienter, ist. Die Stromleitungen 12 sind in Figur 1 mit durchgezogenen schwarzen Linien gekennzeichnet.

Das Bordnetz 1 umfasst ferner einen Spannungswandler 4, der das erste Teilnetz 2 mit dem zweiten Teilnetz 3 verbindet, so dass das erste Teilnetz 2 mit elektrischer Energie aus dem zweiten Teilnetz 3 versorgt werden kann. Der Spannungswandler 4 ist hierzu ausgebildet, eine Gleichspannung aus einem der Teilnetze 2, 3, beispielsweise eine Gleichspannung, mit der das erste Teilnetz 2 betrieben wird, zu empfangen und eine Ausgangsspannung zu erzeugen, welche von der eingangsseitig empfangen Spannung verschieden ist (DC/DC-Wandler). Der Spannungswandler 4 kann auch bidirektional ausgeführt sein.

Das Bordnetz umfasst ferner eine Steuereinheit 8, die über entsprechende Signalleitungen mit den entsprechenden Komponenten des Bordnetzes 1 verbunden ist, insbesondere dem Spannungswandler und der elektrischen Maschine 10, wobei hier nur die Signalleitung 13 zur elektrischen Maschine 10 als gepunktete Linie dargestellt ist.

Die Signalleitung bzw. Steuerleitung 13 dient zur Steuerung der elektrischen Maschine 13, d. h. z. B. zur Übermittlung der Spannungsvorgabe für die elektrische Maschine 10. Die Steuereinheit 8 kann als separates Steuergerät zur Steuerung der elektrischen Maschine 10 ausgebildet sein oder als Teil einer übergeordneten Steuereinheit (nicht dargestellt), die andere Komponenten des Bordnetzes 1, insbesondere den Spannungswandler 4 und die Energiespeicher 5, 9, überwacht und steuert. Eine solche übergeordnete Steuereinheit empfängt beispielsweise von den Energiespeichern 5, 9 und von einem Batteriemanagementsystem (nicht gezeigt) der Energiespeichers 5, 9 Daten über die Ladungszustände der Energie-speicher 5, 9. Die Steuereinheit ist ferner ausgebildet, an den Spannungswandler 4 in Abhängigkeit der empfangenen Ladungszustände oder Lastanforderungen entsprechende Steuersignale auszugeben. In Abhängigkeit der von der Steuereinheit empfangenen Steuersignale ist der Spannungswandler 4 eingerichtet, Energie vom ersten Teilnetz 2 in das zweite Teilnetz 3 zu übertragen und ggf. umgekehrt, falls dieser bidirektional ausgeführt ist. Eine solche übergeordnete Bordnetzsteuereinheit ist an sich aus dem Stand der Technik bekannt und daher hier nicht näher beschrieben.

Es wird betont, dass die in Figur 1 dargestellte Bordnetztopologie lediglich beispielhaft ist und aus dem Stand der Technik eine Vielzahl weiterer Varianten von Bordnetztopologien zur Einbindung einer elektrischen Maschine und eines elektrischen Energiespeichers für den Hybridbetrieb bekannt sind, mit denen das erfindungsgemäße Verfahren ebenfalls ausführbar ist.

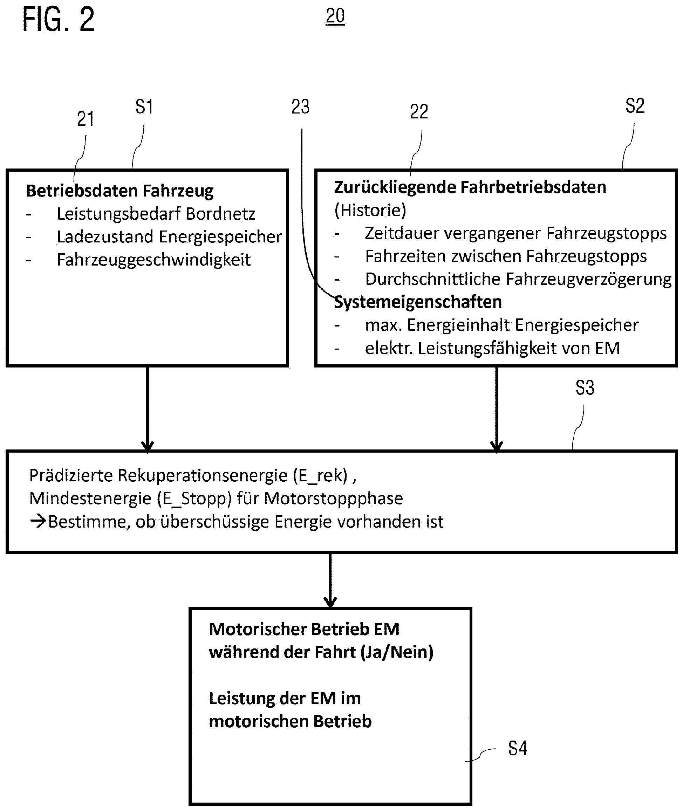

Figur 2 zeigt ein schematisches Ablaufdiagramm zur Illustration eines Betriebsverfahrens gemäß einem Ausführungsbeispiel der Erfindung, das von der Steuereinrichtung 8 der elektrischen Maschine 10 durchgeführt wird.

In einem ersten Schritt S1 werden nach einem Fahrzeugstart, d. h. während eines Fahrbetriebs des Kraftfahrzeugs, aktuelle Fahrzeugbetriebsdaten 21 ermittelt. Hierbei wird der aktuelle Leistungsbedarf des Bordnetzes 1, der aktuelle Ladezustand des zweiten Energiespeichers 9 und die aktuelle Fahrzeuggeschwindigkeit ermittelt.

Anschließend wird basierend auf den ermittelten Fahrzeugbetriebsdaten ermittelt, ob überschüssige Energie im zweiten Energiespeicher 9 vorhanden ist. Hierzu werden in Schritt S2 von der Steuereinrichtung 8 im Fahrzeug hinterlegte zurückliegende Fahrbetriebsdaten 22 und Systemeigenschaften 23 ermittelt. Insbesondere wird eine Zeitdauer vergangener Fahrzeugstopps, die Fahrzeiten zwischen Fahrzeugstopps und eine durchschnittliche Fahrzeugverzögerung ausgelesen. Die Werte dieser Parameter basieren auf einer Fahrbetriebshistorie, d. h. auf zurückliegenden bzw. vergangenen Fahrbetriebsdaten.

Vorstehend wurde bereits erwähnt, dass diese zurückliegenden Fahrbetriebsdaten 22 vom Kraftfahrzeug selbst auf Basis des vergangenen Fahrverhaltens ermittelt worden sein können oder alternativ können diese Daten auch auf Basis eines vergangenen Fahrbetriebs eines oder mehrere anderer Fahrzeugs ermittelt worden sein und anschließend in dem Kraftfahrzeug hinterlegt oder anderweitig zur Verfügung gestellt worden sein.

Die vorstehend genannten Betriebsparameter und zurückliegenden Fahrbetriebsdaten sind besonders geeignet, um eine Prognose zu treffen, ob aktuell überschüssige elektrische Energie vorhanden ist, die für eine spätere Nutzung verloren gehen würde und die daher für einen motorischen Betrieb der elektrischen Maschine im Fahrbetrieb genutzt werden könnte, um die Kraftstoffeinsparung zu erhöhen.

Je höher beispielsweise der aktuelle Leistungsbedarf des Bordnetzes ist, desto weniger Energie steht für den motorischen Betrieb der elektrischen Maschine 10 im Fahrbetrieb zur Verfügung. Je höher der Ladezustand des zweiten Energiespeichers 9 ist, desto mehr Energie steht dagegen für den motorischen Betrieb der elektrischen Maschine 10 im Fahrbetrieb zur Verfügung. Je höher die aktuelle Fahrzeuggeschwindigkeit ist, desto höher ist die kinetische Energie des Fahrzeugs, die bei dem nachfolgenden Rekuperationsvorgang rekuperiert werden kann und umso wahrscheinlicher ist es, das überschüssige Energie vorhanden ist. Für die Abschätzung dieser Rekuperationsenergie werden ferner die durchschnittliche Fahrzeugverzögerung und die elektrische Leistungsfähigkeit der elektrischen Maschine 10 verwendet.

Je größer die Zeitdauer vergangener Fahrzeugstopps ist, desto größer ist voraussichtlich der Energiebedarf zur Versorgung des Bordnetzes in der kommenden Stopp-Phase des Fahrzeugs, welche vorgehalten werden sollte und somit die überschüssige Energie reduziert. Je größer der maximale Energieinhalt des Energiespeicher 9 ist, desto größer ist prozentual die Kapazität, die nicht als Mindestreserve für einen kommenden Warmstart des Verbrennungsmotors mittels der elektrischen Maschine 10 und für eine Bordnetzversorgung reserviert werden muss und somit für den motorischen Betrieb der elektrischen Maschine 10 zur Verfügung steht.

Nachfolgend wird erläutert, wie im Fahrbetrieb entschieden wird, ob und mit welcher Leistung der elektrischen Maschine 10 ein motorischer Betrieb der elektrischen Maschine 10 von der Steuereinrichtung 8 eingeleitet werden kann. Dies erfolgt in Schritt S3 anhand eines Bewertungsmodells, das nachfolgend erläutert ist.

Erfindungsgemäß wird eine Rekuperationsenergie E_rek für einen aktuellen Betriebszustand des Kraftfahrzeugs abgeschätzt, wobei die Rekuperationsenergie E_rek angibt, wieviel Energie rekuperierbar wäre, falls das Kraftfahrzeug ausgehend vom momentanen Fahrzustand bis mindestens auf einen Geschwindigkeitsschwellenwert v_min abgebremst würde. Der Geschwindigkeitsschwellenwert v_min gibt hierbei die Geschwindigkeitsgrenze an, oberhalb derer Energie im Rekuperationsbetrieb rekuperierbar ist und unterhalb derer kein Rekuperationsbetrieb möglich ist. Die Rekuperationsenergie E_rek schätzt somit ab, wieviel Energie aus der kinetischen Bewegungsenergie des Kraftfahrzeugs durchschnittlich rekuperierbar ist, falls das Kraftfahrzeug bis zum Stillstand abgebremst wird und beispielsweise in eine Stopp-Phase des Stopp-Start-Betriebs übergeht.

Die bestimmte bzw. prädizierte Rekuperationsenergie E_rek wird in Abhängigkeit von der aktuellen Fahrzeuggeschwindigkeit, der durchschnittlichen Fahrzeugverzögerung, der aktuellen Bordnetzlast und voraussichtlichen elektrischen Leistungsfähigkeit der elektrischen Maschine während der Rekuperation (inkl. Derating), die einer maximalen generatorischen Leistungsfähigkeit des Rekuperationsbetriebs entspricht, bestimmt. So wird eine voraussichtliche Bremsdauer aus der aktuellen Fahrzeuggeschwindigkeit und einer angenommenen durchschnittlichen Fahrzeugverzögerung, die auf Basis zurückliegender Fahrbetriebsdaten ermittelt wurde, abgeschätzt. Basierend auf der voraussichtlichen Bremsdauer ergibt sich dann aus einer angenommenen Rekuperationsleistung, z. B. unter Annahme einer maximalen generatorischen bzw. elektrischen Leistungsfähigkeit der elektrischen Maschine (z. B. in Abhängigkeit der Komponententemperatur) abzüglich des aktuellen Leistungsbedarfs des Bordnetzes (aktuelle Bordnetzlast), die voraussichtlich rekuperierbare Energie, falls das Fahrzeug zum Stillstand gebracht wird. Auf diese Weise kann ausgehend vom momentanen Fahrzustand des Fahrzeugs die voraussichtlich rekuperierbare Energie zuverlässig vorhergesagt bzw. abgeschätzt werden.

Die durchschnittliche Fahrzeugverzögerung gibt an, mit welcher Durchschnittsverzögerung das Kraftfahrzeug bei einem Rekuperationsvorgang verzögert wird, was auf Basis zurückliegender Fahrbetriebsdaten bestimmt wurde.

Erfindungsgemäß wird die Mindestenergie E_Stopp, die durchschnittlich für eine Motorstoppphase eines Stopp-Start-Betriebs benötigt wird, bestimmt. Hierbei wird die Mindestenergie E_Stopp, die durchschnittlich für eine Motorstoppphase eines Stopp-Start-Betriebs benötigt wird, als Summe aus einer Motorstartenergie für den Start-Stopp-Betrieb und einem Energiebedarf für eine Bordnetzversorgung während einer Stopp-Phase des Stopp-Start-Betriebs bestimmt werden. Ferner kann von dieser Energie die beim Stoppen des Verbrennungsmotors rückgespeiste Energie abgezogen werden. Die Motorstartenergie gibt hierbei an, wieviel elektrische Energie aus dem Energiespeicher für den Warmstart des Verbrennungsmotors im Rahmen des Stopp-Start-Betriebs benötigt wird, wobei die elektrische Maschine als Startermotor dient. Der Energiebedarf für die Bordnetzversorgung wird in Abhängigkeit von einer durchschnittlichen Fahrzeugstillstandszeit der Stopp-Phase und einer durchschnittlichen Bordnetzlast bestimmt. Auf diese Weise kann ermittelt werden, wieviel elektrische Energie bei Fahrzeugstillstand für die Grundfunktionen, z. B. Motorstart und Bordnetzversorgung, während der Stopp-Phase vonnöten ist.

Erfindungsgemäß wird in Abhängigkeit von einem aktuellen Ladezustand des Energiespeichers, der bestimmten Rekuperationsenergie und der bestimmten Mindestenergie in Schritt S4 bestimmt werden, ob und/oder wieviel Energie für einen motorischen Betrieb der elektrischen Maschine während der Fahrt zu Verfügung steht. Wenn festgestellt wird, dass genügend überschüssige Energie zur Verfügung steht, wird ein motorischer Betrieb der elektrischen Maschine im Fahrbetrieb bis zum nächsten Fahrzeugstopp durchgeführt. Die Leistung, mit der die elektrische Maschine 10 dabei betrieben wird, wird so eingestellt, dass höchstens die ermittelte überschüssige Energie bis zur voraussichtlich nächsten Rekuperationsphase bzw. Fahrzeugstopp ausgegeben wird.

Auf diese Weise kann sonst nicht sinnvoll nutzbare Energie zur Entlastung des Verbrennungsmotors eingesetzt werden und gleichzeitig die Versorgungssicherheit des Bordnetzes und die Warmstartfähigkeit sichergestellt werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den durch die beigefügten Patentansprüche definierten Bereich der Erfindung zu verlassen. Folglich soll die Erfindung nicht auf die offenbarten Ausführungsbeispiele begrenzt sein, sondern soll alle Ausführungsbeispiele umfassen, die in den durch die beigefügten Patentansprüche definierten Bereich der beigefügten Patentansprüche fallen.

### Bezugszeichenliste

- 1: Bordnetz
- 2: Erstes Teilnetz
- 3: Zweites Teilnetz
- 4: Spannungswandler, z. B. DC/DC-Wandler
- 5: Energiespeicher im ersten Teilnetz
- 6: Lastwiderstand
- 7: Startermotor
- 8: Steuereinrichtung
- 9: Elektrischer Energiespeicher
- 10: Elektrische Maschine, z. B. Startergenerator
- 11: Inverter
- 12: Stromleitungen des Bordnetzes
- 13: Steuerleitung
- 20: Ablaufdiagramm Betriebsverfahren
- 21: Aktuelle Betriebsdaten des Fahrzeugs
- 22: Zurückliegende Fahrbetriebsdaten
- 23: Systemeigenschaften

## Patentansprüche

1. Betriebsverfahren (20) zur Steuerung eines motorischen Betriebs einer motorisch und generatorisch betreibbaren elektrischen Maschine (10) eines Mild-Hybridantriebs eines Kraftfahrzeugs, aufweisend einen Energiespeicher, der ausgebildet ist, von der elektrischen Maschine rekuperierte Energie zu speichern und die elektrische Maschine mit elektrischer Energie zu versorgen,
wobei die elektrische Maschine (10) dazu ausgebildet ist, einen Verbrennungsmotor des Kraftfahrzeugs zumindest zeitweise anzutreiben und in einem Rekuperationsbetrieb elektrische Energie zu erzeugen,
wobei eine Entscheidung, ob und/oder mit welcher Leistung ein motorischer Betrieb der elektrischen Maschine (10) während der Fahrt durchgeführt wird, um mit einem motorischen Drehmoment den Verbrennungsmotor des Kraftfahrzeugs zu entlasten, in Abhängigkeit von momentanen Werten mindestens eines Betriebsparameters (21) des Kraftfahrzeugs und in Abhängigkeit von zurückliegenden Fahrbetriebsdaten (22) bestimmt wird; wobei der mindestens eine Betriebsparameter einen Leistungsbedarf des Fahrzeugbordnetzes, eine Fahrzeuggeschwindigkeit, und einen Ladezustand des Energiespeichers umfasst, wobei die zurückliegenden Fahrbetriebsdaten eine Zeitdauer von Fahrzeugstopps im Rahmen eines Stopp-Start-Betriebs des Kraftfahrzeugs, bei dem die Brennkraftmaschine unter vorbestimmten Bedingungen automatisch abgeschaltet und mittels der elektrischen Maschine gestartet werden kann und eine durchschnittliche Fahrzeugverzögerung angeben, **dadurch gekennzeichnet, dass**
die Entscheidung, ob und/oder mit welcher Leistung ein motorischer Betrieb der elektrischen Maschine (10) während der Fahrt durchgeführt wird, folgende Schritte umfasst:
a) Bestimmen einer Rekuperationsenergie (E_rek) für einen aktuellen Betriebszustand des Kraftfahrzeugs, wobei die Rekuperationsenergie angibt, wieviel Energie rekuperierbar wäre, falls das Kraftfahrzeug ausgehend vom momentanen Fahrzustand bis mindestens auf einen Geschwindigkeitsschwellenwert abgebremst würde, wobei der Geschwindigkeitsschwellenwert vorzugsweise eine Geschwindigkeitsgrenze angibt, oberhalb derer Energie im Rekuperationsbetrieb rekuperierbar ist und unterhalb derer kein Rekuperationsbetrieb möglich ist, wobei die bestimmte Rekuperationsenergie (E_rek) in Abhängigkeit von der aktuellen Fahrzeuggeschwindigkeit, der durchschnittlichen Fahrzeugverzögerung, einer Bordnetzlast und einer maximalen Ladeleistung an dem elektrischen Energiespeicher bestimmt werden;
b) Bestimmen einer Mindestenergie (E_Stopp), die durchschnittlich für eine Motorstoppphase eines Stopp-Start-Betriebs benötigt wird, wobei die Mindestenergie (E_Stopp) als Summe aus einer Motorstartenergie für den Stopp-Start-Betrieb und einem Energiebedarf für eine Bordnetzversorgung während eines Stopp-Phase des Stopp-Start-Betriebs bestimmt wird, wobei der Energiebedarf für die Bordnetzversorgung in Abhängigkeit von der Zeitdauer vergangener Fahrzeugstopps im Rahmen eines Stopp-Start-Betriebs des Kraftfahrzeugs und dem Leistungsbedarf des Fahrzeugbordnetzes bestimmt wird;
c) Bestimmen, ob und/oder wieviel Energie für einen motorischen Betrieb der elektrischen Maschine während der Fahrt zu Verfügung steht in Abhängigkeit vom aktuellen Ladezustand des Energiespeichers, der bestimmten Rekuperationsenergie und der bestimmten Mindestenergie.

2. Betriebsverfahren nach Anspruch 1, **dadurch gekennzeichnet, dass** der Ladezustand des Energiespeichers die gespeicherte und/oder noch speicherbare Energie angibt.

3. Betriebsverfahren nach Anspruch 1 oder 2, **dadurch gekennzeichnet, dass** die zurückliegenden Fahrbetriebsdaten auch eine Fahrzeit zwischen Fahrzeugstopps im Rahmen des Stopp-Start-Betriebs des Kraftfahrzeugs angeben, und dass die zurückliegenden Fahrbetriebsdaten basierend auf zurückliegenden, d. h. vorausgegangenen Fahrbetriebssituationen des Fahrzeugs oder von Fremdfahrzeugen ermittelt wurden.

4. Betriebsverfahren nach einem der vorhergehenden Ansprüche, **dadurch gekennzeichnet, dass** die Entscheidung, ob und/oder mit welcher Leistung ein motorischer Betrieb der elektrischen Maschine während der Fahrt durchgeführt wird, um mit einem motorischen Drehmoment den Verbrennungsmotor des Kraftfahrzeugs zu entlasten, in Abhängigkeit von mindestens einer Systemeigenschaft (23) des Mildhybridantriebs bestimmt wird.

5. Betriebsverfahren nach Anspruch 4, **dadurch gekennzeichnet, dass** die mindestens eine Systemeigenschaft einen maximalen Energieinhalt eines Energiespeichers, eine aktuell gespeicherte Energiemenge des Energiespeichers und/oder eine elektrische Leistungsfähigkeit der elektrischen Maschine umfasst, wobei der Energiespeicher ausgebildet ist, von der elektrischen Maschine rekuperierte Energie zu speichern,.

6. Betriebsverfahren nach Anspruch 4 oder 5, **dadurch gekennzeichnet,**
a) **dass** in Abhängigkeit von momentanen Werten des mindestens einen Betriebsparameters des Kraftfahrzeugs, der zurückliegenden Fahrbetriebsdaten und vorzugsweise der mindestens einen Systemeigenschaft unter Verwendung eines Bewertungsmodell (24) oder einer Bewertungsfunktion ermittelt wird, ob überschüssige Energie vorhanden ist, wobei überschüssige Energie diejenige elektrische Energie des Fahrzeugs ist, die voraussichtlich nicht zur Versorgung eines Bordnetzes (1) des Kraftfahrzeugs und für den Motorstart durch die elektrische Maschine (10) im Rahmen des Stopp-Start-Betriebs des Kraftfahrzeugs benötigt wird; und
b) **dass** falls überschüssige Energie vorhanden ist, diese zumindest zum Teil für einen motorischen Betrieb der elektrischen Maschine (10) während der Fahrt verbraucht wird.

7. Verfahren nach einem der vorhergehenden Ansprüche, **dadurch gekennzeichnet, dass** die bestimmte Rekuperationsenergie (E_rek) im Fahrbetrieb fortlaufend neu berechnet wird, sobald sich der Fahrzeugzustand, insbesondere die Fahrzeuggeschwindigkeit, ändert.

8. Verfahren nach einem der vorhergehenden Ansprüche, **dadurch gekennzeichnet, dass** das Kraftfahrzeug ein Bordnetz aufweist, mit einem ersten Teilnetz (2), in dem eine erste Nennspannung (U1) anliegt, umfassend einen ersten Energiespeicher (5) und einen durch mehrere Verbraucher gebildeten ersten Lastwiderstand (6); einem zweiten Teilnetz (3), in dem eine zweite Nennspannung (U2), die größer als die erste Nennspannung (U1) ist, anliegt, umfassend die generatorisch und motorisch betreibbare elektrische Maschine (10), einen zweiten Energiespeicher (9), der dazu ausgebildet ist, die elektrische Maschine (10) zumindest zeitweise mit elektrischer Energie zu versorgen und von der elektrischen Maschine erzeugte Energie zu speichern, und einem Spannungswandler (4), der das erste und zweite Teilnetz (2, 3) miteinander koppelt.

9. Verfahren nach einem der vorhergehenden Ansprüche, **dadurch gekennzeichnet, dass** die zurückliegenden Fahrbetriebsdaten vom Kraftfahrzeug selbst auf Basis des vergangenen Fahrverhaltens ermittelt werden.

10. Verfahren nach einem der vorhergehenden Ansprüche, **dadurch gekennzeichnet, dass** die zurückliegenden Fahrbetriebsdaten auf Basis eines vergangenen Fahrbetriebs eines oder mehrere anderer Fahrzeugs ermittelt werden und anschließend in dem Kraftfahrzeug hinterlegt oder anderweitig zur Verfügung gestellt werden.

11. Vorrichtung (8) zur Steuerung eines motorischen Betriebs einer motorisch und gene-ratorisch betreibbaren elektrischen Maschine (10) eines Mild-Hybridantriebs eines Kraftfahrzeugs, **dadurch gekennzeichnet, dass** die Vorrichtung (8) ausgebildet ist, das Betriebsverfahren gemäß der vorhergehenden Ansprüche durchzuführen.

12. Kraftfahrzeug, insbesondere Nutzfahrzeug, mit einer Vorrichtung (8) nach Anspruch 11.

## Claims

1. Operating method (20) for controlling motor operation of an electric machine (10), which can be operated as a motor and as a generator, of a mild hybrid drive of a motor vehicle, the motor vehicle comprising an energy storage device which is configured to store energy recuperated by the electric machine and to supply the electric machine with electrical energy,
wherein the electric machine (10) is configured to drive an internal combustion engine of the motor vehicle at least temporarily and to generate electrical energy in a recuperation mode,
wherein a decision as to whether and/or with what power a motor operation of the electric machine (10) is carried out during travel in order to relieve the internal combustion engine of the motor vehicle with a motor torque is determined as a function of current values of at least one operating parameter (21) of the motor vehicle and as a function of past driving operation data (22);
wherein the at least one operating parameter comprises a power requirement of the vehicle on-board power supply system, a vehicle speed, and a state of charge of the energy storage device, wherein the past driving operation data indicate a time duration of vehicle stops in the context of a stop-start operation of the motor vehicle, in which the internal combustion engine can be automatically switched off under predetermined conditions and started by means of the electric machine, and an average vehicle deceleration, **characterised in that**
the decision as to whether and/or with what power a motor operation of the electric machine (10) is carried out during travel comprises the following steps:
a) determining a recuperation energy (E_rek) for a current operating state of the motor vehicle, the recuperation energy indicating how much energy could be recuperated if the motor vehicle were braked, starting from the current driving state, to at least a speed threshold value, the speed threshold value preferably indicating a speed limit above which energy can be recuperated in recuperation mode and below which no recuperation mode is possible, the determined recuperation energy (E_rek) being determined as a function of the current vehicle speed, the average vehicle deceleration, an on-board power supply load and a maximum charging power at the electrical energy storage device;
b) determining a minimum energy (E_Stopp) which is required on average for an engine stop phase of a stop-start operation, the minimum energy (E_Stopp) being determined as the sum of an engine start energy for the stop-start operation and an energy requirement for an on-board power supply during a stop phase of the stop-start operation, the energy requirement for the on-board power supply being determined as a function of the time duration of past vehicle stops in the context of a stop-start operation of the motor vehicle and the power requirement of the vehicle on-board power supply system;
c) determining whether and/or how much energy is available for motor operation of the electric machine during travel as a function of the current state of charge of the energy storage device, the determined recuperation energy and the determined minimum energy.

2. Operating method according to claim 1, **characterised in that** the state of charge of the energy storage device indicates the stored and/or still storable energy.

3. Operating method according to claim 1 or 2, **characterised in that** the past driving operation data also indicate a driving time between vehicle stops in the context of the stop-start operation of the motor vehicle, and that the past driving operation data were determined on the basis of past, i.e. preceding, driving operation situations of the vehicle or of third-party vehicles.

4. Operating method according to one of the preceding claims, **characterised in that** the decision as to whether and/or with what power a motor operation of the electric machine is carried out during travel in order to relieve the internal combustion engine of the motor vehicle with a motor torque is determined as a function of at least one system characteristic (23) of the mild hybrid drive.

5. Operating method according to claim 4, **characterised in that** the at least one system characteristic comprises a maximum energy content of an energy storage device, a currently stored amount of energy of the energy storage device and/or an electrical capacity of the electric machine, wherein the energy storage device is configured to store energy recuperated by the electric machine.

6. Operating method according to claim 4 or 5, **characterised in that**
a) as a function of current values of the at least one operating parameter of the motor vehicle, of the past driving operation data and preferably of the at least one system characteristic, it is determined, using an evaluation model (24) or an evaluation function, whether surplus energy is present, surplus energy being that electrical energy of the vehicle which is probably not required for supplying an on-board power supply system (1) of the motor vehicle and for an engine start by the electric machine (10) in the context of the stop-start operation of the motor vehicle; and
b) if surplus energy is present, it is at least partially consumed for a motor operation of the electric machine (10) during travel.

7. Method according to one of the preceding claims, **characterised in that** the determined recuperation energy (E_rek) is continuously recalculated during driving operation as soon as the vehicle state, in particular the vehicle speed, changes.

8. Method according to one of the preceding claims, **characterised in that** the motor vehicle has an on-board power supply system with a first sub-network (2), in which a first nominal voltage (U1) is present, comprising a first energy storage device (5) and a first load resistor (6) formed by a plurality of loads; a second sub-network (3), in which a second nominal voltage (U2), which is greater than the first nominal voltage (U1), is present, comprising the electric machine (10), which can be operated as a generator and as a motor, a second energy storage device (9), which is configured to supply the electric machine (10) at least temporarily with electrical energy and to store energy generated by the electric machine, and a voltage converter (4), which couples the first and second sub-networks (2, 3) to one another.

9. Method according to one of the preceding claims, **characterised in that** the past driving operation data are determined by the motor vehicle itself on the basis of past driving behaviour.

10. Method according to one of the preceding claims, **characterised in that** the past driving operation data are determined on the basis of a past driving operation of one or more other vehicles and are subsequently stored in the motor vehicle or otherwise made available.

11. Device (8) for controlling motor operation of an electric machine (10), which can be operated as a motor and as a generator, of a mild hybrid drive of a motor vehicle, **characterised in that** the device (8) is configured to carry out the operating method according to the preceding claims.

12. Motor vehicle, in particular commercial vehicle, with a device (8) according to claim 11.

## Revendications

1. Procédé de fonctionnement (20) destiné à commander un fonctionnement en mode moteur d'une machine électrique (10) pouvant fonctionner en mode moteur et en mode générateur d'un groupe motopropulseur hybride léger d'un véhicule à moteur, comportant un accumulateur d'énergie qui est conçu pour accumuler de l'énergie récupérée à partir de la machine électrique et pour alimenter la machine électrique en énergie électrique,
la machine électrique (10) étant conçue pour entraîner au moins temporairement un moteur à combustion interne du véhicule à moteur et pour produire de l'énergie électrique dans un mode de récupération,
une décision de savoir si et/ou avec quelle puissance un fonctionnement en mode moteur de la machine électrique (10) est effectué pendant le déplacement afin de réduire la charge imposée au moteur à combustion interne du véhicule à moteur au moyen d'un couple moteur, étant prise en fonction de valeurs instantanées d'au moins un paramètre de fonctionnement (21) du véhicule à moteur et en fonction de données de fonctionnement de déplacement antérieures (22) ;
ledit au moins un paramètre de fonctionnement comprenant une demande de puissance du réseau de bord du véhicule à moteur, une vitesse du véhicule à moteur, et un état de charge de l'accumulateur d'énergie, les données de fonctionnement de déplacement antérieures indiquant une durée d'arrêts du véhicule à moteur dans un mode arrêt-démarrage du véhicule à moteur, lors duquel le moteur à combustion interne peut être arrêté automatiquement dans des conditions prédéterminées et démarré au moyen de la machine électrique, et une décélération moyenne du véhicule, **caractérisé en ce que**
la décision de savoir si et/ou avec quelle puissance un fonctionnement en mode moteur de la machine électrique (10) est effectué pendant le déplacement comprend les étapes suivantes :
a) déterminer une énergie de récupération (E_rek) pour un état de fonctionnement actuel du véhicule à moteur, l'énergie de récupération indiquant la quantité d'énergie qui pourrait être récupérée si le véhicule à moteur était freiné, à partir de l'état de déplacement instantané, jusqu'à au moins une valeur de seuil de vitesse, la valeur de seuil de vitesse indiquant de préférence une limite de vitesse au-dessus de laquelle de l'énergie peut être récupérée en mode de récupération et en dessous de laquelle aucun mode de récupération n'est possible, l'énergie de récupération déterminée (E_rek) étant déterminée en fonction de la vitesse actuelle du véhicule à moteur, de la décélération moyenne du véhicule, d'une charge du réseau de bord et d'une puissance de charge maximale imposée à l'accumulateur d'énergie électrique ;
b) déterminer une énergie minimale (E_Stopp) nécessaire en moyenne pour une phase d'arrêt du moteur d'un mode arrêt-démarrage, l'énergie minimale (E_Stopp) étant déterminée comme étant la somme d'une énergie de démarrage du moteur pour le mode arrêt-démarrage et d'un besoin en énergie pour une alimentation du réseau de bord pendant une phase d'arrêt du mode arrêt-démarrage, le besoin en énergie pour l'alimentation du réseau de bord étant déterminé en fonction de la durée d'arrêts antérieurs du véhicule dans un mode arrêt-démarrage du véhicule à moteur et de la demande de puissance du réseau de bord du véhicule à moteur ;
c) déterminer si et/ou quelle quantité d'énergie est disponible pour un fonctionnement en mode moteur de la machine électrique pendant le déplacement, en fonction de l'état de charge actuel de l'accumulateur d'énergie, de l'énergie de récupération déterminée et de l'énergie minimale déterminée.

2. Procédé de fonctionnement selon la revendication 1, **caractérisé en ce que** l'état de charge de l'accumulateur d'énergie indique l'énergie stockée et/ou pouvant encore être accumulée.

3. Procédé de fonctionnement selon la revendication 1 ou 2, **caractérisé en ce que** les données de fonctionnement de déplacement antérieures indiquent également une durée de déplacement entre des arrêts du véhicule dans le mode arrêt-démarrage du véhicule à moteur, et que les données de fonctionnement de déplacement antérieures ont été déterminées sur la base de situations de fonctionnement de déplacement antérieures, c'est-à-dire précédentes, du véhicule ou de véhicules à moteur tiers.

4. Procédé de fonctionnement selon l'une des revendications précédentes, **caractérisé en ce que** la décision de savoir si et/ou avec quelle puissance un fonctionnement en mode moteur de la machine électrique est effectué pendant le déplacement afin de réduire la charge imposée au moteur à combustion interne du véhicule à moteur au moyen d'un couple moteur, est prise en fonction d'au moins une propriété système (23) du groupe motopropulseur hybride léger.

5. Procédé de fonctionnement selon la revendication 4, **caractérisé en ce que** ladite au moins une propriété système comprend un contenu en énergie maximal d'un accumulateur d'énergie, une quantité d'énergie actuellement accumulée de l'accumulateur d'énergie et/ou une capacité de puissance électrique de la machine électrique, l'accumulateur d'énergie étant conçu pour accumuler de l'énergie récupérée à partir de la machine électrique.

6. Procédé de fonctionnement selon la revendication 4 ou 5, **caractérisé en ce que**
a) en fonction de valeurs instantanées dudit au moins un paramètre de fonctionnement du véhicule à moteur, des données de fonctionnement de déplacement antérieures et de préférence de ladite au moins une propriété système, il est déterminé, à l'aide d'un modèle d'évaluation (24) ou d'une fonction d'évaluation, si de l'énergie excédentaire est présente, l'énergie excédentaire étant l'énergie électrique du véhicule à moteur qui n'est vraisemblablement pas nécessaire pour alimenter un réseau de bord (1) du véhicule à moteur et pour un démarrage du moteur par la machine électrique (10) dans le mode arrêt-démarrage du véhicule à moteur ; et
b) si de l'énergie excédentaire est présente, celle-ci est consommée au moins en partie pour un fonctionnement en mode moteur de la machine électrique (10) pendant le déplacement.

7. Procédé selon l'une des revendications précédentes, **caractérisé en ce que** l'énergie de récupération déterminée (E_rek) est recalculée en continu pendant le fonctionnement de déplacement dès que l'état du véhicule, en particulier la vitesse du véhicule, change.

8. Procédé selon l'une des revendications précédentes, **caractérisé en ce que** le véhicule à moteur comporte un réseau de bord ayant un premier sous-réseau (2) dans lequel est appliquée une première tension nominale (U1), comprenant un premier accumulateur d'énergie (5) et une première résistance de charge (6) formée par plusieurs consommateurs ; un deuxième sous-réseau (3) dans lequel est appliquée une deuxième tension nominale (U2) qui est supérieure à la première tension nominale (U1), comprenant la machine électrique (10) pouvant fonctionner en mode générateur et en mode moteur, un deuxième accumulateur d'énergie (9) qui est conçu pour alimenter la machine électrique (10) au moins temporairement en énergie électrique et pour accumuler de l'énergie produite par la machine électrique, et un transformateur de tension (4) qui couple l'un à l'autre les premier et deuxième sous-réseaux (2, 3).

9. Procédé selon l'une des revendications précédentes, **caractérisé en ce que** les données de fonctionnement de déplacement antérieures sont déterminées par le véhicule à moteur lui-même sur la base d'un comportement de conduite antérieur.

10. Procédé selon l'une des revendications précédentes, **caractérisé en ce que** les données de fonctionnement de déplacement antérieures sont déterminées sur la base d'un fonctionnement de déplacement antérieur d'un ou de plusieurs autres véhicules et sont ensuite mémorisées dans le véhicule à moteur ou mises à disposition d'une autre manière.

11. Dispositif (8) destiné à commander un fonctionnement en mode moteur d'une machine électrique (10) pouvant fonctionner en mode moteur et en mode générateur d'un groupe motopropulseur hybride léger d'un véhicule à moteur, **caractérisé en ce que** le dispositif (8) est conçu pour mettre en œuvre le procédé de fonctionnement selon les revendications précédentes.

12. Véhicule à moteur, en particulier véhicule utilitaire, comprenant un dispositif (8) selon la revendication 11.
